# EUROPEAN PATENT SPECIFICATION

(11) **EP 4 082 336 B1**
(45) Date of publication and mention of the grant of the patent: **24.09.2025**
(21) Application number: 22166313.1
(22) Date of filing: 01.04.2022
(51) Int. Cl.: A01M 7/00

(54) **PEST CONTROL VEHICLE**
SCHÄDLINGSBEKÄMPFUNGSFAHRZEUG
VÉHICULE DE LUTTE CONTRE LES ORGANISMES NUISIBLES

(30) Priority: 05.04.2021 JP 2021064433
(43) Date of publication of application: 02.11.2022
(73) Proprietor: Yanmar Holdings Co., Ltd., Osaka-shi, Osaka (JP)
(72) Inventor: WAKUTA, Kensaku, Okayama (JP); NAKAYAMA, Ai, Osaka (JP)
(74) Representative: Novagraaf International SA

(56) References cited:
- EP-A1- 0 580 247
- EP-A2- 2 441 321
- EP-B1- 2 104 419
- WO-A1-2020/080377
- WO-A1-2020/256035
- FR-A1- 2 966 753
- IT-A1- UA20 163 509
- US-A- 5 662 267

## Description

### TECHNICAL FIELD

The present invention mainly relates to a pest control vehicle that sprays chemical liquid for pest control.

### BACKGROUND ART

Japanese Patent Application Publication No. 2020-152285 discloses an agricultural vehicle including a chemical liquid tank and nozzle units. Chemical liquid for pest control is stored in the chemical liquid tank. A left and right pair of nozzle units are disposed on the agricultural vehicle. The chemical liquid of the chemical liquid tank is pumped to the nozzle units to be sprayed from the nozzle units. Document WO2020256035A1 discloses an automatic traveling system for a work vehicle.

### PRIOR ART DOCUMENT

### PATENT DOCUMENT

Patent Document 1: Japanese Patent Application Publication No. 2020-152285

### SUMMARY OF INVENTION

### TECHNICAL PROBLEM

Plants (spray target objects) planted on an inclined ground generally grow along a vertical direction. Therefore, when the pest control vehicle travels on the inclined ground, the direction of the pest control vehicle and the direction of the plants are different from those in the case of traveling on a flat ground. As a result, the positional relationship between the nozzle unit and the plant may not be appropriate.

The present invention is made in view of the above circumstance, and a main object of the present invention is to provide a pest control vehicle that can appropriately maintain the positional relationship between chemical liquid injection portions and an spray target object even when spraying chemical liquid while traveling on an inclined ground.

### SOLUTION TO PROBLEM

The problem to be solved by the present invention is as described above. The present invention is defined in claim 1. Next, means for solving the problem and effects thereof will be described.

According to an aspect not part of the claimed invention, a pest control vehicle configured as below is provided. In other words, the pest control vehicle includes a vehicle body, traveling portions, a chemical liquid tank, chemical liquid ducts, chemical liquid injection portions, and rotation support portions. The traveling portions allow the vehicle body to travel. The chemical liquid ducts are attached to the vehicle body and are disposed to extend in the up-down direction, and the chemical liquid for pest control flows through the chemical liquid ducts. The chemical liquid injection portions are connected to the chemical liquid duct, and the plurality of chemical liquid injection portions are arranged side by side in the up-down direction. The rotation support portion supports the chemical liquid ducts and attaches the chemical liquid ducts to the vehicle body to allow the chemical liquid ducts to rotate relative to the vehicle body about a front-back direction as a rotation axis.

Thus, even when the chemical liquid is sprayed during traveling on an inclined ground, the positional relationship of the chemical liquid ducts and the chemical liquid injection portions to a spray target object can be appropriately maintained.

In the pest control vehicle, a height of the rotation axis of the rotation support portion is above a center in the up-down direction of the chemical liquid duct.

Thus, at the time of traveling on an inclined ground, the chemical liquid ducts can rotate under own weight of the chemical liquid ducts.

In the pest control vehicle, the following configurations are preferably provided. In other words, the rotation support portion includes a base portion and a slide portion. The base portion is attached to the vehicle body. The slide portion is switchable between a state where the slide portion slides to the base portion in a left-right direction and a state where sliding of the slide portion is restricted, and the slide portion supports the chemical liquid ducts. The slide portion is slid to change a position in the left-right direction of the chemical liquid injection portions.

Accordingly, the position of the rotation axis is adjusted based on the angle of an inclined ground or the shape or the like of the spray target object, and thus the positional relationship between the chemical liquid injection portions and the spray target object can be more appropriately maintained.

In the pest control vehicle, the following configurations are preferably provided. In other words, the vehicle body includes a left vehicle body and a right vehicle body, and a passage space through which a spray target object passes is formed between the left vehicle body and the right vehicle body. A left inner wall surface of the left vehicle body, which faces the passage space, includes an inclined portion that is inclined closer to a left side toward a top. A right inner wall surface of the right vehicle body, which faces the passage space, includes an inclined portion that is inclined closer to a right side toward the top.

Thus, when traveling on the inclined ground, the pest control vehicle is less likely to come into contact with the spray target object passing through the passage space.

According to the claimed invention, a pest control vehicle configured as below is provided. In other words, the pest control vehicle includes a vehicle body, traveling portions, and chemical liquid injection portions. The vehicle body includes a left vehicle body and a right vehicle body, and a passage space through which a spray target object passes is formed between the left vehicle body and the right vehicle body. The traveling portions allow the vehicle body to travel. The chemical liquid injection portions inject chemical liquid for pest control. A left inner wall surface of the left vehicle body, which faces the passage space, includes an inclined portion that is inclined closer to a left side toward a top. A right inner wall surface of the right vehicle body, which faces the passage space, includes an inclined portion that is inclined closer to a right side toward the top.

Thus, when traveling on the inclined ground, the pest control vehicle is less likely to come into contact with the spray target object passing through the passage space.

In the pest control vehicle, the following configurations are preferably provided. In other words, a left outer wall surface of the left vehicle body, which faces an outer side in a left-right direction, includes an inclined portion that is inclined closer to the right side toward the top. A right outer wall surface of the right vehicle body, which faces an outer side in the left-right direction, includes an inclined portion that is inclined closer to the left side toward the top.

Thus, when traveling on the inclined ground, the pest control vehicle is less likely to come into contact with a spray target object located at the outer side in the left-right direction of the pest control vehicle.

### BRIEF DESCRIPTION OF DRAWINGS

FIG. 1 is a perspective view of a pest control vehicle according to a first embodiment of the present invention.
FIG. 2 is a schematic back view illustrating a configuration of a back surface of the pest control vehicle.
FIG. 3 is a perspective view illustrating an operation of a position adjustment mechanism.
FIG. 4 is a schematic back view illustrating a state where a pest control vehicle of the prior art sprays chemical liquid while traveling on an inclined ground.
FIG. 5 is a schematic back view illustrating a state where the pest control vehicle according to the present embodiment sprays chemical liquid while traveling on an inclined ground.

### DESCRIPTION OF EMBODIMENTS

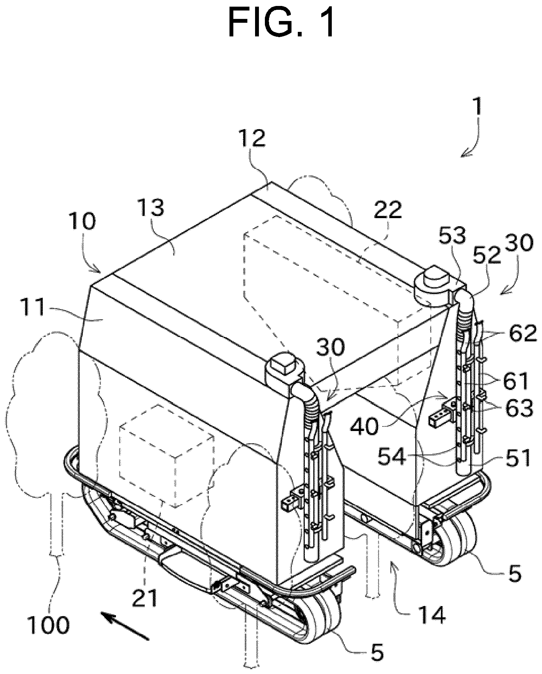

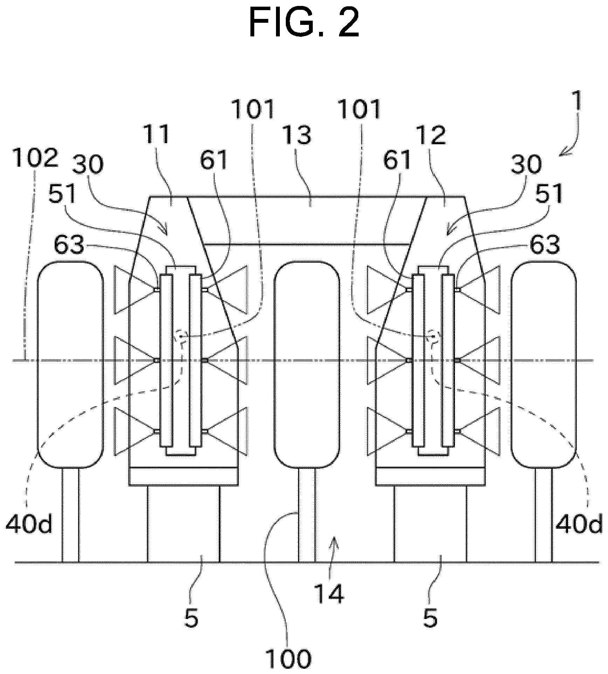

Next, embodiments of the present invention will be described with reference to the drawings. FIG. 1 is a perspective view of a pest control vehicle 1. FIG. 2 is a schematic back view illustrating a configuration of a back surface of the pest control vehicle 1. In the descriptions below, a direction in which the pest control vehicle 1 travels when spraying chemical liquid is determined as the front side, and the front, back, left, and right sides are defined. Accordingly, a vehicle width direction coincides with the left-right direction, and a vehicle length direction coincides with the front-back direction. In addition, a left and right pair (or front and back pair) of components disposed in the pest control vehicle 1 are designated with the same reference number, and descriptions thereof may be omitted or simplified.

The pest control vehicle 1 is a vehicle that sprays chemical liquid on plants 100 (spray target objects, work target objects) raised on a farm or the like. The plants 100 are, for example, orchard trees but may be vegetables. As illustrated in FIGS. 1 and 2, the pest control vehicle 1 includes crawler traveling portions 5 and a vehicle body 10.

The crawler traveling portions 5 are each a hydraulic type, and hydraulic oil is supplied to a hydraulic motor (not illustrated) to rotate a drive sprocket. Accordingly, crawlers wound on the drive sprockets, driving wheels, or the like rotate to allow the pest control vehicle 1 to travel. Further, by differentiating driving speeds of the left and right crawler traveling portions 5, the pest control vehicle 1 can turn. Furthermore, by differentiating driving directions of the left and right crawler traveling portions 5, the pest control vehicle 1 can turn without changing the position.

The vehicle body 10 is supported by the crawler traveling portions 5. The vehicle body 10 includes a left vehicle body 11, a right vehicle body 12, and an upper vehicle body 13.

The left vehicle body 11 is mainly supported by the left crawler traveling portion 5. The left vehicle body 11 includes a frame and a cover covering the frame. The right vehicle body 12 is mainly supported by the right crawler traveling portion 5. The right vehicle body 12 includes a frame and a cover covering the frame. Upper portions of the left vehicle body 11 and the right vehicle body 12 are connected by the upper vehicle body 13. Thus, a passage space 14 surrounded by the left vehicle body 11, the right vehicle body 12, and the upper vehicle body 13 is formed.

The passage space 14 is a space in which components are not disposed from the ground to a predetermined height and through which the plants 100 can pass when the pest control vehicle 1 travels. Thus, the left and right crawler traveling portions 5 travel while sandwiching the plants 100 in the left-right direction. In other words, the pest control vehicle 1 travels in the farm while straddling the plants 100.

An engine 21 is disposed in the left vehicle body 11. The engine 21 generates drive force to allow the pest control vehicle 1 to travel (power to operate a hydraulic motor). Note that the engine 21 may be disposed in the right vehicle body 12.

A chemical liquid tank 22 is disposed in the right vehicle body 12. Chemical liquid is stored in the chemical liquid tank 22. The chemical liquid stored in the chemical liquid tank 22 is medical agent having a function such as moth proofing, insect killing, or weeding. Note that the chemical liquid tank 22 may be disposed in the left vehicle body 11.

Additionally, injection units 30 are respectively disposed on back surfaces of the left vehicle body 11 and the right vehicle body 12. Each of the injection units 30 sprays the chemical liquid to both the left and right sides. Consequently, as illustrated in FIG. 2, the pest control vehicle 1 can simultaneously spray the chemical liquid on a right portion of the plant 100 on the left side of the pest control vehicle 1, both left and right portions of the plant 100 passing through the passage space 14, and a left portion of the plant 100 on the right side of the pest control vehicle 1. Note that the injection units 30 may be disposed on front surfaces of the left vehicle body 11 and the right vehicle body 12. The configuration of the injection unit 30 will be described below in detail.

The pest control vehicle 1 is configured to autonomously travel in the farm. In other words, the pest control vehicle 1 detects its current position by using GNSS or the like. Additionally, an autonomous travel route is created in advance based on position information of the farm. With such a configuration, the pest control vehicle 1 sprays the chemical liquid on the plants 100 while autonomously traveling based on the current position and the autonomous travel route.

Note that the pest control vehicle 1 is not limited to a vehicle that autonomously travels. The pest control vehicle 1 may be, for example, a vehicle that travels by remote control. The remote control is referred to as control in which an operation by an operator located away from the pest control vehicle 1 (that is, an operator not riding on the pest control vehicle 1) allows the pest control vehicle 1 to travel or allows the pest control vehicle 1 to spray the chemical liquid.

Next, the injection unit 30 will be described in detail with reference to FIGS. 1 to 3. The left and right injection units 30 are configured in the same manner or are configured symmetrically with respect to a plane passing through the center in the vehicle width direction. Therefore, the left and right injection units 30 will be summarized and described below.

The injection unit 30 of the present embodiment injects both the chemical liquid and air. The injection of the air supports the chemical liquid to be sprayed. Specifically, the chemical liquid is splashed by the air, and thus the chemical liquid can be uniformly applied. In particular, in the case of spraying the chemical liquid on leaves of the plants 100, the leaves sway with the air; therefore, the chemical liquid can be sprayed uniformly on the front and back of the leaves. Additionally, the air to be injected is increased, and thus a distance in which the chemical liquid is sprayed can be increased. Note that components for injecting the air are not essential components and can be omitted.

The injection unit 30 includes, as components for injecting the air, a blower duct 51, a blower hose 52, a blower device 53, and air injection portions 54.

The blower duct 51 is attached via a rotation support portion 40 to the vehicle body 10. The rotation support portion 40 includes a bearing and the like and allows the blower duct 51 to be attached to the vehicle body 10 such that the blower duct 51 can rotate relative to the vehicle body 10. Note that the configuration of the rotation support portion 40 will be described below in detail.

The blower duct 51 is disposed to extend in the up-down direction. In other words, the blower duct 51 is an elongated member, and is disposed such that its longitudinal direction substantially coincides with the up-down direction (vehicle height direction). Note that, for example, even when the longitudinal direction of the blower duct 51 is deviated from the up-down direction by few angles, the longitudinal direction of the blower duct 51 is defined to substantially coincide with the up-down direction (that is, the blower duct 51 extends in the up-down direction).

A space through which air (particularly, compressed air) for supporting the chemical liquid to be sprayed passes is formed inside the blower duct 51. The blower hose 52 that supplies air is connected to the blower duct 51. Specifically, an upper end of the blower duct 51 is opened. The blower duct 51 is configured such that a coupler of the blower hose 52 is connectable to the upper end. The blower hose 52 is connected to the blower device 53. In the present embodiment, a portion of the blower hose 52 is a flexible hose that is extendable. Thus, in a case where the position or the like of the blower duct 51 is adjusted or in a case where rattling or the like occurs, countermeasures can be taken.

The blower device 53 sucks air in or sends the air to generate compressed air and send the compressed air. The blower device 53 is disposed on the level higher than the blower duct 51. One blower device 53 is disposed on the left vehicle body 11 and one blower device 53 is disposed on the right vehicle body, and thus a total of two blower devices 53 are disposed. The blower device 53 is disposed such that a portion is exposed from the vehicle body to suck outside air in.

A plurality of air injection portions 54 are disposed in the blower duct 51. The air injection portions 54 are each a hole through which air is injected. Note that the air injection portion 54 may be a nozzle. The air injection portions 54 are disposed side by side in the up-down direction. The air injection portions 54 are formed on left and right surfaces of the blower duct 51.

The injection unit 30 includes chemical liquid ducts 61 from which the chemical liquid is injected, chemical liquid hoses 62, and chemical liquid injection portions 63.

A left and right pair of chemical liquid ducts 61 that inject the chemical liquid toward the left side and the right side are attached to the blower duct 51. Accordingly, the pest control vehicle 1 of the present embodiment includes four chemical liquid ducts 61. Additionally, in the present embodiment, the chemical liquid ducts 61 are supported via the blower duct 51 on the vehicle body 10 but may be supported on the vehicle body 10 without the blower duct 51. The chemical liquid ducts 61 are each disposed to extend in the up-down direction, and the longitudinal direction of the chemical liquid duct 61 is parallel to the longitudinal direction of the blower duct 51.

A space through which the chemical liquid stored in the chemical liquid tank 22 passes is formed inside the chemical liquid duct 61. The chemical liquid hoses 62 that supplies the chemical liquid from the chemical liquid tank 22 are respectively connected to the chemical liquid ducts 61. Specifically, an upper end of the chemical liquid duct 61 is opened. The chemical liquid duct 61 is configured such that a coupler of the chemical liquid hose 62 is connectable to the upper end. Additionally, a pump (not illustrated) is disposed in a pathway that connects the chemical liquid duct 61 to the chemical liquid tank 22. The chemical liquid in the chemical liquid tank 22 is pumped by the pump to the chemical liquid duct 61. Note that a pathway of the chemical liquid hose 62 may be disposed in any manner but is preferably disposed so as not to pass through the passage space 14. In other words, the chemical liquid hose 62 connected to the left chemical liquid duct 61 is preferably connected through the upper vehicle body 13 to the chemical liquid tank 22.

A plurality of chemical liquid injection portions 63 are disposed on the chemical liquid duct 61. The chemical liquid injection portions 63 are each a nozzle from which the chemical liquid is injected. The chemical liquid injection portions 63 are disposed side by side in the up-down direction. The chemical liquid injection portions 63 are disposed in a direction enabling the aforementioned chemical liquid to be sprayed. Specifically, on the injection unit 30 disposed on the left vehicle body 11, the chemical liquid injection portions 63 are disposed at the left side of the left chemical liquid duct 61, and the chemical liquid injection portions 63 are disposed at the right side of the right chemical liquid duct 61. The same applies to the right vehicle body 12.

In the present embodiment, the number of air injection portions 54 disposed in the single injection unit 30 is greater than the number of chemical liquid injection portions 63 disposed in the single injection unit 30. Thus, the chemical liquid can be uniformly sprayed while the number of chemical liquid injection portions 63 is suppressed. Note that the number of chemical liquid injection portions 63 may be equal to the number of air injection portions 54 or the number of chemical liquid injection portions 63 may be greater than the number of air injection portions 54.

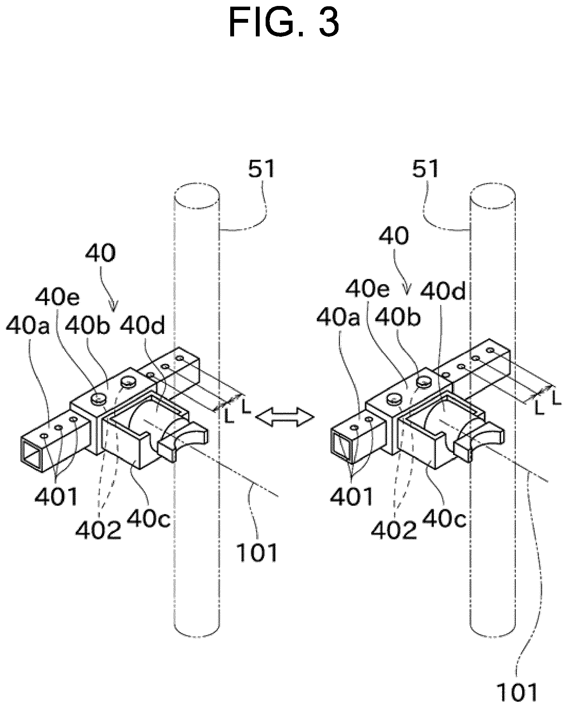

Next, the configuration of the rotation support portion 40 will be described in detail with reference to FIG. 3.

The rotation support portion 40 supports the blower duct 51 such that the blower duct 51 can rotate about a rotation axis 101. The rotation axis 101 is substantially the same direction as the front-back direction. Additionally, the chemical liquid ducts 61 and the chemical liquid injection portions 63 are attached to the blower duct 51. Therefore, by rotating the blower duct 51, the chemical liquid ducts 61 and the chemical liquid injection portions 63 also integrally rotate. Note that the chemical liquid ducts 61 are connected to the blower device 53 by the chemical liquid hoses 62 including flexible hoses. Consequently, even when the chemical liquid ducts 61 rotate relative to the vehicle body 10, the displacement can be absorbed by the chemical liquid hoses 62.

As illustrated in FIG. 3, the rotation support portion 40 includes a base portion 40a, a slide portion 40b, a relay member 40c, a bearing 40d, and a fixation member 40e.

The base portion 40a is fixed to the left vehicle body 11 or the right vehicle body 12. The slide portion 40b is configured to switch between a first state in which the slide portion 40b can slide relative to the base portion 40a in the left-right direction and a second state in which sliding of the slide portion 40b is restricted. Specifically, attachment holes 401 are formed side by side in the left-right direction and at predetermined intervals L in the base portion 40a. Attachment holes 402 are formed in the slide portion 40b at the same intervals L or at intervals, each of which is integral multiple of L. By aligning the attachment holes 401 of the base portion 40a with the attachment holes 402 of the slide portion 40b and fixing the slide portion 40b to the base portion 40a with the fixation member 40e, the slide portion 40b is brought into a non-slidable state to the base portion 40a (the second state). Then, by removing the fixation member 40e, the slide portion 40b is brought into a slidable state to the base portion 40a (the first state).

With such a configuration, the slide portion 40b is slid in the left-right direction to the base portion 40a to be mounted at a desired position, thereafter being fixed to the base portion 40a with the attachment holes 401 of the base portion 40a aligned with the attachment holes 402 of the slide portion 40b. As described above, the position in the left-right direction of the blower duct 51 (simultaneously, the position in the left-right direction of the chemical liquid injection portions 63) can be changed.

An outer race of the bearing 40d is fixed via the relay member 40c to the slide portion 40b. Also, the blower duct 51 is fixed via the relay member 40c to an inner race of the bearing 40d. With the above configuration, the rotation support portion 40 supports the blower duct 51 such that the blower duct 51 is rotatable. Therefore, the blower duct 51, the air injection portions 54, the chemical liquid ducts 61, the chemical liquid injection portions 63, and the like can integrally rotate relative to the vehicle body 10.

As illustrated in FIG. 2, the height of the bearing 40d (i.e., the height of the rotation axis 101) is above the center in the up-down direction of the chemical liquid duct 61 (i.e., an imaginary line 102 illustrated in FIG. 2). Therefore, when being inclined, the pest control vehicle 1 can rotate, under its own weight, the blower ducts 51, the air injection portions 54, the chemical liquid ducts 61, the chemical liquid injection portions 63, and the like integrally relative to the vehicle body 10.

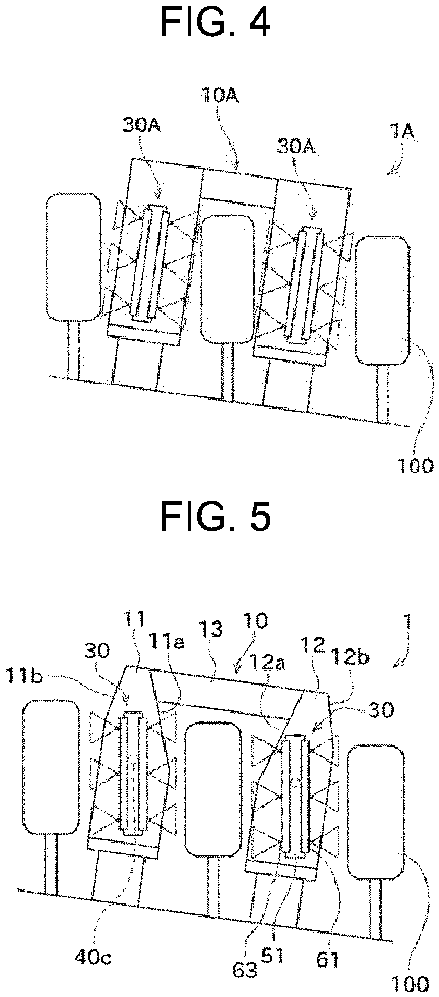

Next, pest control on an inclined ground will be described with reference to FIGS. 4 and 5.

Initially, referring to FIG. 4, problems in a case where pest control is performed on an inclined ground by using a conventional pest control vehicle will be described. As illustrated in FIG. 4, a pest control vehicle 1A is basically in a vertical position relative to the ground. In contrast, the plants 100 vertically grow. Therefore, the positional relationship between the pest control vehicle 1A and the plant 100 when pest control is performed on the inclined ground is different from that when pest control is performed on the flat ground.

Specifically, as shown in FIG. 4, the plants 100 are inclined to the pest control vehicle 1A. Accordingly, injection units 30A are inclined to the plants 100. As a result, the distance between the chemical liquid injection portions and the plant 100 is too close or too far, and the chemical liquid cannot be sprayed uniformly on the plant 100. Further, a vehicle body 10A is inclined to the plants 100. As a result, an appropriate distance between an inner wall surface of the vehicle body 10A and the plant 100 cannot be maintained, and according to the circumstances, the vehicle body 10A may come into contact with the plant 100.

In this regard, in the present embodiment, the pest control vehicle 1 is inclined, and thus the blower ducts 51, the chemical liquid ducts 61, and the like are rotated by the bearings 40d. Accordingly, the longitudinal direction of the blower duct 51 and the chemical liquid duct 61 extends along the vertical direction (see FIG. 5). In other words, even when the pest control vehicle 1 travels on an inclined ground, the injection units 30 do not tilt relative to the plants 100. As a result, variations in the distance between the chemical liquid injection portions 63 and the plant 100 are less likely to occur.

Furthermore, the vehicle body 10 of the present embodiment includes a portion that tilts to maintain an appropriate distance from the plant 100 when traveling on the inclined ground. Specifically, as illustrated in FIG. 5, a left inner wall surface of the left vehicle body 11 (a surface facing the passage space 14) includes a first left inclined surface 11a. The first left inclined surface 11a is a surface inclined to the left side (outer side in the vehicle width direction) toward the top of the pest control vehicle 1. Similarly, a right inner wall surface of the right vehicle body 12 (a surface facing the passage space 14) includes a first right inclined surface 12a. The first right inclined surface 12a is a surface inclined to the right side (outer side in the vehicle width direction) toward the top of the pest control vehicle 1. The first left inclined surface 11a and the first right inclined surface 12a are formed, and thus the distance between the plant 100 in the passage space 14 and the vehicle body 10 can be appropriately maintained.

As described above, in the present embodiment, the left-right position of the chemical liquid duct 61 and the like can be changed by the rotation support portion 40. When the left-right position of the chemical liquid duct 61 is changed, the left-right position of the bearing 40d (that is, the left-right position of the rotation axis 101) is changed at the same time. As just described, the left-right position is adjusted by using the rotation support portion 40, and thus the position of the rotation axis 101 can be adjusted. Accordingly, for example, the left-right position of the rotation axis 101 is adjusted based on the inclination angle and the size, shape, or the like of the plant 100, and thus the positional relationship between the chemical liquid injection portions 63 and the plant 100 can be more appropriately set.

In addition, a left outer wall surface of the left vehicle body 11 (a surface facing the outer side in the vehicle width direction) includes a second left inclined surface 11b. The second left inclined surface 11b is a surface inclined to the right side (inner side in the vehicle width direction) toward the top of the pest control vehicle 1. Similarly, a right outer wall surface of the right vehicle body 12 (a surface facing the outer side in the vehicle width direction) includes a second right inclined surface 12b. The second right inclined surface 12b is a surface inclined closer to the left side (inner side in the vehicle width direction) toward the top of the pest control vehicle 1. The second left inclined surface 11b and the second right inclined surface 12b are formed, and thus the distance between each of the plants 100 located on the left and right sides of the vehicle body 10 and the vehicle body 10 can be appropriately maintained.

The pest control vehicle 1 of the present embodiment includes the vehicle body 10, the crawler traveling portions 5, the chemical liquid ducts 61, the chemical liquid injection portions 63, and the rotation support portions 40. The crawler traveling portions 5 allow the vehicle body 10 to travel. The chemical liquid ducts 61 are attached to the vehicle body 10 and are disposed to extend in the up-down direction, and the chemical liquid for pest control flows through the chemical liquid ducts 61. The chemical liquid injection portions 63 are connected to the chemical liquid ducts 61, and the plurality of chemical liquid injection portions 63 are arranged side by side in the up-down direction. The rotation support portion 40 supports the chemical liquid ducts 61, and the chemical liquid ducts 61 are attached via the rotation support portion 40 to the vehicle body 10 such that the chemical liquid ducts 61 can rotate relative to the vehicle body 10 about the front-back direction as the rotation axis 101.

Thus, even when the chemical liquid is sprayed during traveling on an inclined ground, the positional relationship of the chemical liquid duct 61 and the chemical liquid injection portions 63 to the plant 100 can be appropriately maintained.

In the pest control vehicle 1 of the present embodiment, the height of the rotation axis 101 of the rotation support portion 40 is above the center in the up-down direction of the chemical liquid duct 61.

Thus, at the time of traveling on the inclined ground, the chemical liquid ducts 61 and the chemical liquid injection portions 63 can rotate under own weight of the chemical liquid ducts 61.

In the pest control vehicle 1 of the present embodiment, the rotation support portion 40 includes the base portion 40a and the slide portion 40b. The base portion 40a is attached to the vehicle body 10. The slide portion 40b is switchable between a state in which the slide portion 40b is slidable in the left-right direction to the base portion 40a and a state in which sliding of the slide portion 40b is restricted, and the slide portion 40b supports the chemical liquid ducts 61. By sliding the slide portion 40b, the left-right position of the chemical liquid injection portion 63 is changed.

Accordingly, the position of the rotation axis 101 is adjusted based on the angle of the inclined ground or the shape or the like of the plant 100, and thus the positional relationship between the chemical liquid injection portions 63 and the plant 100 can be more appropriately maintained.

In the pest control vehicle 1 of the present invention, the vehicle body 10 includes the left vehicle body 11 and the right vehicle body 12, and the passage space 14 through which a spray target object passes is formed between the left vehicle body 11 and the right vehicle body 12. The left inner wall surface of the left vehicle body 11 facing the passage space 14 includes an inclined portion (the first left inclined surface 11a) that is inclined closer to the left side toward the top. The right inner wall surface of the right vehicle body 12 facing the passage space 14 includes an inclined portion (the first right inclined surface 12a) that is inclined closer to the right side toward the top.

Thus, when traveling on the inclined ground, the pest control vehicle is less likely to come into contact with a spray target object passing through the passage space.

In the pest control vehicle 1 of the present embodiment, the left outer wall surface of the left vehicle body 11 facing the outer side in the left-right direction includes an inclined portion (the second left inclined surface 11b) that is inclined closer to the right side toward the top. The right outer wall surface of the right vehicle body 12 facing the outer side in the left-right direction includes an inclined portion (the second right inclined surface 12b) that is inclined closer to the left side toward the top.

Thus, when traveling on the inclined ground, the pest control vehicle is less likely to come into contact with a spray target object located at the outer side in the left-right direction of the pest control vehicle.

The preferred embodiments of the present invention are described above ; however, the aforementioned configurations can be changed, for example, as follows.

The pest control vehicle 1 of the present embodiment is configured such that the air is injected to support the chemical liquid to be sprayed, but the configuration to inject the air may be omitted.

The chemical liquid ducts 61 of the present embodiment are supported by the blower duct 51, but the chemical liquid ducts 61 may be supported by the rotation support portion 40 or the like without being supported by the blower duct 51.

The inner wall surface of the vehicle body 10 of the present embodiment includes a vertical portion and an inclined portion. Alternatively, the entire inner wall surface of the vehicle body 10 may be inclined.

In the present embodiment, the injection unit 30 is configured to rotate under its own weight to be oriented in the vertical direction. Alternatively, the injection unit 30 may be rotated by using an actuator such as a motor.

The pest control vehicle 1 of the aforementioned embodiment travels with the crawlers but may travel with driving wheels.

### REFERENCE SIGNS LIST

1 Pest control vehicle
5 Crawler traveling portion (traveling portion)
10 Vehicle body
11 Left vehicle body
11a First left inclined surface (left inner wall surface)
11b Second left inclined surface (left outer wall surface)
12 Right vehicle body
12a First right inclined surface (right inner wall surface)
12b Second right inclined surface (right outer wall surface)
13 Upper vehicle body
14 Passage space
30 Injection unit
40 Rotation support portion
40a Base portion
40b Slide portion
61 Chemical liquid duct
62 Chemical liquid hose
63 Chemical liquid injection portion
101 Rotation axis
102 Imaginary line

## Claims

1. A pest control vehicle (1), comprising:
a vehicle body (10) that includes a left vehicle body (11) and a right vehicle body (12), where a passage space allowing passage of a spray target object is formed between the left vehicle body (11) and the right vehicle body (12);
traveling portions (5) that allow the vehicle body (10) to travel; and
chemical liquid injection portions (63) that inject chemical liquid for pest control,
**characterized in that**:
a left inner wall surface of the left vehicle body (11), which faces the passage space, includes an inclined portion that is inclined closer to a left side toward a top, and
a right inner wall surface of the right vehicle body (12), which faces the passage space, includes an inclined portion that is inclined closer to a right side toward the top.

2. The pest control vehicle according to claim 1, wherein a left outer wall surface (11b) of the left vehicle body (11), which faces an outer side in a left-right direction, includes an inclined portion that is inclined closer to the right side toward the top, and
a right outer wall surface (12b) of the right vehicle body (12), which faces an outer side in the left-right direction, includes an inclined portion that is inclined closer to the left side toward the top.

## Patentansprüche

1. Schädlingsbekämpfungsfahrzeug (1), umfassend:
einen Fahrzeugkörper (10), der einen linken Fahrzeugkörper (11) und einen rechten Fahrzeugkörper (12) umfasst, wobei ein Durchgangsraum, der den Durchgang eines Sprühzielobjekts erlaubt, zwischen dem linken Fahrzeugkörper (11) und dem rechten Fahrzeugkörper (12) gebildet ist;
Fahrabschnitte (5), die es dem Fahrzeugkörper (10) erlauben, zu fahren; und
Chemische-Flüssigkeitseinspritzabschnitte (63), die chemische Flüssigkeit zur Schädlingsbekämpfung einspritzen,
**dadurch gekennzeichnet, dass**:
eine linke Innenwandoberfläche des linken Fahrzeugkörpers (11), die dem Durchgangsraum zugewandt ist, einen geneigten Abschnitt umfasst, der näher zu einer linken Seite hin zu einem Oberteil geneigt ist, und
eine rechte Innenwandoberfläche des rechten Fahrzeugkörpers (12), die dem Durchgangsraum zugewandt ist, einen geneigten Abschnitt umfasst, der näher zu einer rechten Seite hin zum Oberteil geneigt ist.

2. Schädlingsbekämpfungsfahrzeug nach Anspruch 1, wobei eine linke Außenwandoberfläche (11b) des linken Fahrzeugkörpers (11), die einer Außenseite in einer Links-Rechts-Richtung zugewandt ist, einen geneigten Abschnitt umfasst, der näher zur rechten Seite hin zum Oberteil geneigt ist, und
eine rechte Außenwandoberfläche (12b) des rechten Fahrzeugkörpers (12), die einer Außenseite in der Links-Rechts-Richtung zugewandt ist, einen geneigten Abschnitt umfasst, der näher zur linken Seite hin zum Oberteil geneigt ist.

## Revendications

1. Véhicule de lutte contre les organismes nuisibles (1), comprenant :
un corps de véhicule (10) qui comprend un corps de véhicule gauche (11) et un corps de véhicule droit (12), où un espace de passage permettant le passage d'un objet cible de pulvérisation est formé entre le corps de véhicule gauche (11) et le corps de véhicule droit (12) ; des parties mobiles (5) qui permettent au corps de véhicule (10) de se déplacer ; et
des parties d'injection de liquide chimique (63) qui injectent le liquide chimique pour la lutte contre les organismes nuisibles,
**caractérisé en ce que** :
une surface de paroi interne gauche du corps de véhicule gauche (11), qui fait face à l'espace de passage, comprend une partie inclinée qui est inclinée plus à proximité d'un côté gauche vers un sommet, et
une surface de paroi interne droite du corps de véhicule droit (12), qui fait face à l'espace de passage, comprend une partie inclinée qui est inclinée plus à proximité d'un côté droit vers le sommet.

2. Véhicule de lutte contre les organismes nuisibles selon la revendication 1, dans lequel une surface de paroi externe gauche (11b) du corps de véhicule gauche (11), qui fait face à un côté externe dans une direction gauche - droite, comprend une partie inclinée qui est inclinée plus à proximité du côté droit vers le sommet, et
une surface de paroi externe droite (12b) du corps de véhicule droit (12), qui fait face à un côté externe dans la direction gauche - droite, comprend une partie inclinée qui est inclinée plus à proximité du côté gauche vers le sommet.
